# EUROPEAN PATENT APPLICATION

(11) **EP 1 109 013 A2**
(43) Date of publication of application: **20.06.2001**
(21) Application number: 00127539.5
(22) Date of filing: 15.12.2000
(51) Int. Cl.: G01N 27/407

(54) **Gas sensor**

(30) Priority: 17.12.1999 JP 35880199
(71) Applicant: NGK SPARK PLUG CO., LTD, Mizuho-ku Nagoya-shi Aichi (JP)
(72) Inventor: Isomura, Hiroshi, Mizuho-ku, Nagoya-shi, Aich (JP); Mizutani, Akio, Mizuho-ku, Nagoya-shi, Aich (JP); Yamada, Daisuke, Mizuho-ku, Nagoya-shi, Aich (JP)
(74) Representative: Grünecker, Kinkeldey, Stockmair & Schwanhäusser Anwaltssozietät

(57) **Abstract**

A gas sensor (1) comprises: a pair of porous electrode layers (2b and 2c); a detector element (2) between the porous electrode layers (2b and 2c), wherein the detecting element (2) comprises an oxygen ion conductive solid electrolyte comprising zirconium oxide as a major component, and one of the porous electrode layers is a detecting-side electrode (2b) to be exposed to a gas to be measured; and a ceramic protecting layer (2p) covering the surface of the detecting-side electrode (2b), wherein the ceramic protecting layer (2p) comprises a magnesia·alumina spinel component, an excess magnesium oxide component not involved in the magnesia·alumina spinel component, and a zirconium oxide component.

## Description

### Background of the Invention

### 1. Field of the Invention

The present invention relates to a gas sensor such as an oxygen gas sensor.

### 2. Description of the Related Art

For detecting an oxygen concentration of a gas to be measured such as an exhaust gas or air fuel ratio, such a gas sensor has conventionally been served in which a detector element is composed of oxygen ion conductive solid electrolyte of zirconium oxide being a main component. As this kind of the detector element of the gas sensor, disclosed is a cylindrical element main body comprising oxygen ion conductive solid electrolyte closed at a front end, which is formed with a primary electrode of precious metal on the inside thereof and with a secondary electrode on the outside of the same, the side of said secondary electrode being covered with a ceramic protecting layer of such as spinel. A reason why the secondary electrode is covered with the ceramic protecting layer is because for example, if a gas to be measured is a combustion gas generated in an internal combustion engine and when the sensor is used for measuring an oxygen concentration, a substance poisoning the electrode may be contained in the gas to be measured and the electrode must be protected from poisoning.

The gas sensor as mentioned above is generally used at high temperatures, and is effected with thermal shock by heating of a heater for activating solid electrolytes or electrodes of precious metal. As a result, a problem occurs in adhesion or durability of the ceramic protecting layer composed of such as spinel, and an extreme case may result in inconveniences as exfoliation of the protecting layer. JP-A-11-72460 proposes to select, as a composition of a protecting layer composed of magnesia-alumina spinel, an excess composition of magnesium oxide (called as "magnesia-rich composition" hereafter) than a theoretical composition ratio of spinel for improving the adhesion and the durability of the layer, but an effect is not always sufficient.

### Summary of the Invention

It is accordingly an object of the invention to offer a gas sensor where the adhesion and the durability of the ceramic protecting layer covering the electrode of the detector element is improved to be better, and even if being attacked by the thermal shock or the heat cooling cycle under more severer conditions, inconveniences as exfoliation are difficult to occur.

For solving the above mentioned problems, a first structure of the gas sensor according to the invention has a structure that a pair of porous electrode layers are formed on a detector element comprising oxygen ion conductive solid electrolyte of zirconium oxide being a major component, and one of the porous electrode layers is an electrode of a detecting side to be exposed to a gas to be measured, and the electrode is covered on the surface with a ceramic protecting layer, and it is characterized in that the ceramic protecting layer contains magnesia·alumina spinel component, excess magnesium oxide component not concerned with magnesia·alumina spinel component, and zirconium oxide component.

"Major component" referred to in the description is meant by such a component of a weight content ratio being 50 wt% or more. In addition, a phase containing zirconium oxide as a major component is named as zirconia (or "zirconia based phase").

By using the ceramic protecting layer, as construction material, containing a magnesia-alumina spinel component, an excess magnesium oxide component not concerned with magnesia-alumina spinel component, and a zirconium oxide component, it is possible to more improve the adhesion and the durability thereof and to make inconveniences as exfoliation less to occur than the magnesia·alumina spinel protecting layer of mere selection of the magnesia-rich composition not containing zirconium oxide disclosed in JP-A-11-72460.

If adopting the composition containing the zirconium oxide component in addition to the magnesia·alumina spinel component and the excess magnesium oxide component, the durability of the ceramic protecting layer is more improved. A reason therefor may be supposed as follows. At first, the excess magnesium oxide component will play a role as follows. That is, a major component of the oxygen ion conductive solid electrolyte composing the detector element is zirconium oxide, and coefficient of linear expansion thereof is around 10 to 11 (x 10⁻⁶/°C), while coefficient of linear expansion of magnesia·alumina spinel being the component of the protecting layer is smaller than that as around 7 to 9 (x10⁻⁶/°C). Such a spinel based film is excellent in an effect of preventing a poisoning component from attaching the electrode, but since the difference in coefficient of linear expansion in relation with a zirconia based solid electrolyte to be a base is large, strain is easily accumulated by thermal stress when the thermal shock is added or the heat cooling cycle is repeated, so that exfoliation or crack are easy to occur. Therefore, if using the magnesia-alumina spinel having the magnesia-rich composition as the material construction of the protecting layer, since coefficient of linear expansion of magnesia is large as around 13 to 14 (x10⁻⁶/°C), coefficient of linear expansion of the protecting layer becomes large as the content of the excess magnesia is increased. As a result, since reduced is the difference in coefficient of linear expansion between the protecting layer and the zirconia based solid electrolyte layer forming the detector element, and moderated is a thermal stress level generated when the thermal shock or the heat cooling cycle are added, an improvement of the durability of the ceramic protecting layer can be attained.

On the other hand, in the gas sensor of the invention, the zirconium oxide is further contained in the ceramic for forming the protecting layer. Consequently, it is supposed that the above mentioned excess magnesium oxide component forms a so-called metastable zirconia based phase together with the zirconium oxide component thereof, and this phase plays a role to cause a stress inducing transformation to moderate the thermal stress and more improve the durability of the protecting film. In this case, as a phase enabling to cause the stress inducing transformation, it is more desirable that, for example, a tetragonal system phase has been formed, and in case the protecting film is formed by a film forming method accompanying a rapid solidification (for example, ceramic jetting), there is a possibility that phases having other crystal structures than the tetragonal system phase as the zirconia based phases enabling to cause the stress inducing transformation. Among the porous electrodes to be covered with the protecting layer, there are electrodes where grains of zirconia based phase are dispersed of an appropriate amount for reducing the difference in coefficient of linear expansion in relation with the solid electrolyte to be a base. In this case, a chemical affinity with the protecting film and the porous electrode composed by containing the same zirconium oxide is increased, and an effect of increasing the adhesion between the protecting film and the solid electrolyte layer can be expected.

The excess magnesium oxide component may exist in a form of solid solution component (for example, a stabilizing component) for zirconia based phase of zirconium oxide being a major component, or in a form of other phases than the zirconia based phase, for example, a phase of magnesium oxide being a major component (also called as "magnesia based phase" hereafter), otherwise in such a form where a part which is not made solid in the zirconia based phase forms the magnesia based phase.

In the present specification, whether or not the ceramic protecting film contains the magnesia·alumina spinel component, the excess magnesium oxide component not concerned With the forming of magnesia·alumina spinel, and the zirconium oxide component, is distinguished as follows. At first, when the structure of the ceramic protecting film is analyzed by an X-ray diffractometer method, in case diffraction peaks corresponding to the magnesia·alumina spinel base phase, the magnesia based phase and the zirconia based phase are detected in a diffraction pattern, it is assumed that all of the above three components are contained. However, due to influences such as rapidly cooling when forming a film, definite diffraction peaks are not always detected with respect to some of phases. Also, in such a case where, when the composition of the protecting film is analyzed, cation components of Al, Mg and Zr as well as oxygen are detected and when the mol content rate of Al in terms of Al₂O₃ is NA1 and the mol Content rate of Mg in terms of MgO is NMg, "NA1 < NMg" can be confirmed, it is assumed that all of the above three components are contained.

A second structure of the gas sensor according to the invention has a structure that a pair of porous electrode layers are formed on the detector element comprising the oxygen ion conductive solid electrolyte of the zirconium oxide being a major component, and one of the porous electrode layers is an electrode of a detecting side to be exposed to a gas to be measured, and the electrode is Covered on the surface with a ceramic protecting layer, and
it is characterized in that the ceramic protecting layer is an oxide based film containing, as metallic cation, at least Al, Mg and Zr, where Al component is 20 to 69.5 wt% in terms of Al₂O₃, and if the weight content rate of Al in terms of Al₂O₃ is WA1 (wt%) and the weight content rate of Mg in terms of MgO is WMg (wt%), WA1+WMg is 40 to 97 wt%, and if the mol content rate of Al in terms of Al₂O₃ is NA1, and the mol content rate of Mg in terms of MgO is NMg, they are NMg > NA1, and Zr component is 3 to 60 wt% in terms of ZrO₂.

The above mentioned structure grasps the characteristic of the ceramic protecting layer from the viewpoint of the composition, and similarly to the first structure, it is possible to farther heighten the adhesion and the durability of the protecting layer, and even if being attacked by the thermal shock or the heat cooling cycle under more severer conditions, inconveniences as exfoliation are difficult to occur.

As mentioned above, assuming the formation of the magnesia·alumina spinel, being NMg > NA1 is in correspondence to containing of magnesium oxide exceeding it, that is, containing of excess magnesium oxide . A reason for specifying Al to be 20 to 69.5 wt% in terms of Al₂O₃ is because if being less than 20 wt%, a formation of the spinel phase of an enough amount cannot be expected and the strength of the film cannot be sufficiently secured, and if being more than 69.5 wt%, a margin for containing the excess magnesium oxide component or zirconium oxide component is too small, so that the adhesion and the durability of the protecting layer cannot be enough secured. It is good that the Al containing rate is more preferably 25 to 60 wt% in terms of Al₂O₃.

A reason for specifying WA1 + WMg to be 40 to 97 wt% is because if being less than 40 wt%, a formation of the spinel phase of an enough amount cannot be expected and the strength of the film cannot be sufficiently secured, while if being more than 97 wt%, a margin for containing the zirconium oxide component is too small, so that the adhesion and the durability of the protecting layer cannot be enough secured. It is good that WA1 + WMg is more preferably 40 to 80 wt%.

Further, a reason for specifying Zr to be 3 to 60 wt% in terms of ZrO₂ is because if being less than 3 wt%, an effect of improving the adhesion and the durability of the protecting layer cannot be expected, and if being more than 60 wt%, the spinel of an enough amount cannot be expected and the strength of the film cannot be sufficiently secured. If Zr is too much, when the protecting film is formed by the jetting method using the zirconium oxide powder and the spinel power as raw materials and if a jetting electric power level is determined as a standard of a melting temperature of the spinel powder, the zirconium oxide powder is insufficiently melted so that a uniform protecting film cannot be formed, and reversely if the jetting electric power level is determined as a standard of a melting point of the zirconium oxide powder, the electrode is oxidized by a radiant heat when jetting, so that the performance of the detector element is deteriorated. It is good that the Zr containing rate is more preferably 20 to 60 wt% in terms of ZrO₂.

The ceramic protecting layer contains Al component 20 to 69.5 wt%, preferably 20 to 66.5 wt%, in terms of Al₂O₃, and assuming that all of the contained Al component are concerned With the formation of magnesia·alumina spinel having the composition formula of Al₂O₃·MgO, if the weight content rate of all Mg in terms of MgO in the film is WMg (wt%) and the weight content rate of Mg in terms of MgO to be contained in magnesia-alumina spinel is WMg' (wt%), it is good that WMg - WMg' is 4 to 40 wt%. WMg - WMg' corresponds to the containing amount of the excess magnesium oxide, and if being less than 4 wt%, the adhesion and the durability of the protecting layer cannot be often secured. On the other hand, since the magnesium oxide has high moisture absorption and if WMg - WMg' exceeds 40 wt%, the fluidity of raw powders is spoiled, and for example, when the protecting layer is formed as a jetted layer, inconvenience is easy to occur such as unevenness in the film thickness of a protecting film to be formed. WMg - WMg' is more preferably 4.5 to 15 wt%.

The film thickness (meant by the average thickness) of the ceramic protecting layer is good to be adjusted within a range of 50 to 200 µm. If exceeding 200 µm, a thermal capacity of the protecting film is too much increased to delay activation of the detector element and often worsen a responsibility of the sensor. On the other hand, if being less than 50 µm, a rectifying effect of the gas to be measured is spoiled and a non-burnt content in the gas is sensed more than necessarily so that probably a so-called chemical noise is easily caused. It is good that the film thickness of the ceramic protecting layer is more desirably 70 to 150 µm. Preferably, a porosity of the ceramic protecting layer is adjusted in a range of 10 to 40%. If being less than 10%, the flowing of a gas for contacting an external electrode layer and the gas to be measured might not be enough secured to probably worsen a responsibility or an output of the sensor. If exceeding 40%, a protecting effect for the external electrode layer is made weak and a poisoning is easily effected, or the rectifying effect for the gas to be measured is made insufficient to easily cause the chemical noises. In the present specification, the porosity of the ceramic protecting layer is substituted with an area rate of cavity when observing a ground surface of the protecting layer.

### Brief Description of the Drawings

Fig. 1 shows a vertically cross sectional view of the oxygen sensor as one example of the gas sensor according to the invention;
Figs. 2A and 2B show views showing an outside of the oxygen detector element together with the cross sectional structure of the elementary part thereof;
Fig. 3 shows views showing one example of the forming method of the ceramic protecting film by the plasma jetting;
Figs. 4A and 4B show profiles showing one example of the X-ray diffraction patterns of the ceramic protecting layer produced in the experimental example; and
Fig. 5A and 5B shows views showing examples of the measured waveforms of the chemical noises.

Description of the reference numerals is as follows.
- 1: Oxygen sensor (gas sensor)
- 2: Oxygen detector element (sensing element)
- 2b: External electrode layer (porous electrode layer, electrode at the detecting side)
- 2c: Internal electrode layer (porous electrode layer)
- 2p: Ceramic protecting layer

### Detailed Description of the Invention

Further explanation will be made to the mode for carrying out the invention by way of Examples illustrated in the attached drawings.

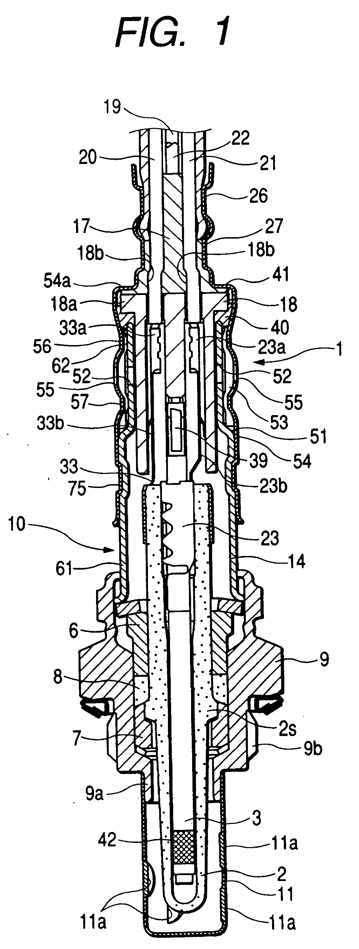

Fig. 1 shows an internal structure of an oxygen sensor as one embodiment of a gas sensor. The oxygen sensor 1 comprises an oxygen detector element 2 as a detector element which is a solid electrolytic member of a hollow shaft closed at an front end, and a heating unit 3. The oxygen detector element 2 is composed of the oxygen ion conductive solid electrolyte of zirconium oxide being a major component (a zirconia based phase stabilized with, e.g., Y₂O₃ being a major component). The oxygen detector element is furnished on the outside with a metal made casing 10.

The casing 10 is provided with a main body metal (metal Shell) 9, an inner tube member 14 and a protector 11, the main body metal 9 having a scraw part 9b for attaching the oxygen sensor to a fixture of such as an exhaust pipe, the inner tube member 14 being combined so as to communicate at its inside with an opening of one side of the main body metal 9, and the protector 11 being attached to the main body metal 9 at an opposite side to the inner tube member 14. In the following explanation, a side of the oxygen detector element 2 axially directing toward the closed front end thereof shall be called as "front side (or a front pointed end)", and a side directing in the opposite direction shall be called as "rear side (or a rear pointed end)".

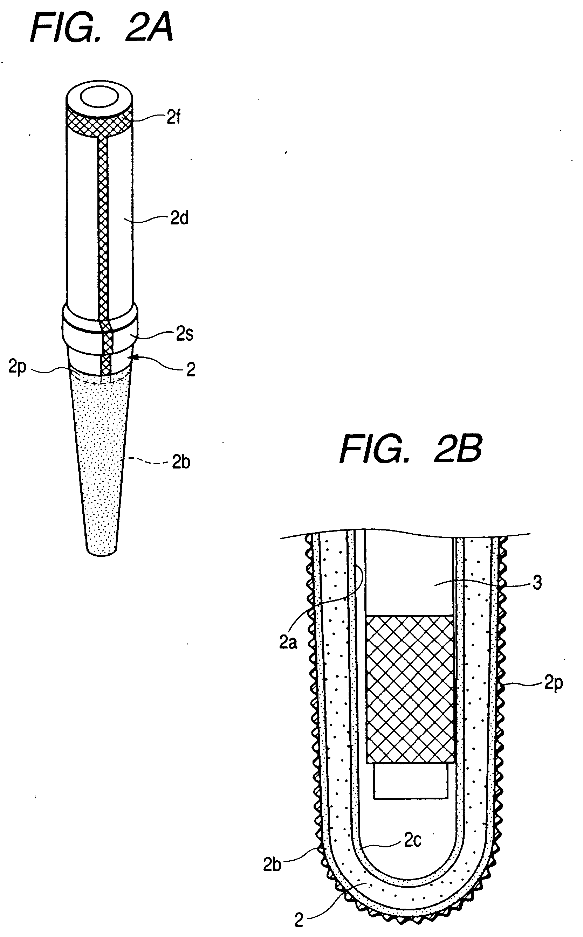

The oxygen detector element 2 is provided on the outside with the main body 9 made of metal. At a position corresponding to an engaging flange portion 2s formed axially at an intermediate part, the oxygen detector element 2 is incorporated into the main body metal 9 via insulators 6, 7 formed with an insulating ceramic and a sealing powder 8 formed with such as talc, and passes therethrough under an electrically insulated condition. In addition, as shown in Fig. 2B, the oxygen detector element 2 is provided at its inside and outside with a pair of electrode layers 2b, 2c as covering almost all over the elementary part. Each of the electrode layers 2b, 2c is composed as a porous electrode, for example, a Pt porous electrode having a reversible catalytic function with respect to a dissociating reaction of an oxygen molecule for pouring oxygen into the solid electrolyte composing the oxygen detector element 2 as well as a re-combining reaction of oxygen for releasing oxygen from the solid electrolyte.

Returning to Fig. 1, an outer tube member 54 is disposed within an opening at the rear side with a grommet (elastic sealing member) 17 composed of such as rubber (e.g., fluoro rubber) and sealed with tightening parts 26, 27. Continuing therefrom, a ceramic separator 18 is provided at further inner part. Leading wires 20, 21 for the oxygen detector element 2 and leading wires 19, 22 for the heating unit 3 are disposed as passing through the ceramic separator 18 and the grommet 17. One leading wire 21 for the oxygen detector element 2 is electrically connected to the electrode layer 2c (Fig. 2B) (called as "inner electrode layer" hereafter) at the inside of the oxygen detector element 2 through a connector 23a and a leading wire 23b which are integrally united, and an inner electrode connecting metal 23. On the other hand, the other leading wire 20 is electrically connected to the electrode layer 2b (Fig. 2B) (called as "outer electrode layer" hereafter: an electrode at the detecting side) at the outside of the oxygen detector element 2 through a connector 33a and a leading wire 33b which are integrally united, and an outer electrode connecting metal 33. The oxygen detector element 2 is activated by heating by the heating unit 3 disposed at the inside thereof. The heating unit 3 is a bar like ceramic heater for heating the front end portion (detecting part) of the oxygen detector element 2 by electric conduction where the thermal unit 42 having a resistance heating wire (not shown) passes through the leading wires 19, 22 (Fig. 1).

The ceramic separator 18 is inserted into the inner tube member 14 from an opening at the rear side, and is supported at a flange part 18a formed circumferentially at the rear end thereof by the opening end of the inner tube member 14, and a plurality of leading wire inserting holes 18b are axially formed for passing leading wires 19 to 22. A first sealing member 40 is fitted at the base part of the ceramic separator 18 as contacting to seal respectively the front end face of the flange 18a of the ceramic separator 18, the opening end of the inner tube member 14 and the inside of the outer tube member 54. A second sealing member 41 is provided between the inner face of a step part 54a of the outer tube member 54 and an outer edge at the rear end of the ceramic separator 18 (flange part 18a) for sealing both. The second sealing member 41 is shaped in brim integrally united to the end of the grommet 17.

The inner tube member 14 is formed at its rear part with a plurality of gas inlets 52 in the circumferential direction and a filter 53 is furnished on an outer side of said rear part to close the gas inlets 52. The outer tube member 54 covers a filter 53 at the outside and is formed with a plurality of auxiliary gas inlets 55 in the circumferential direction. Ring shaped tightening parts 56, 57 are formed at both sides of a row of the auxiliary gas inlets 55, and hold a filter 53 in relation with the inner tube member 14. Actually, the outer tube member 54 is shaped in cylinder coaxialy connected to the inner tube member 14 from the outside of the rear part.

The inner tube member 14 is composed by a stepped part 51 formed axially toward the rear end, such that the second part 62 is smaller in diameter than the first part 61 where a first part 61 is the front side in the axial direction with respect to the stepped part 51, and a second part 62 (rear pointed end) is the rear side in the same axial direction, and the second part 62 is formed with a plurality of gas inlets in the circumferential direction. The second part 62 is disposed on its outside with a cylindrical filter 53 closing the gas inlets 52, and further the filter 53 is covered on its outside with the outer tube member 54. The filter 53 is composed as a water repellent by means of porous fiber structure of, for example, polytetrafluoroethylene (trade name: Goatex of Japan Goatex (KK)) which prevents penetration of liquid of a water such as a water drop being main and allows penetration of a gas such as an air and/or a steam.

In a position corresponding to the filter 53, the plurality of auxiliary gas inlets 55 are formed at a wall part of the outer tube member 54 with fixed intervals in the circumferential direction, and at the same time, the ring shaped tightening parts 56, 57 are formed at both sides of the row of the auxiliary gas inlets 55, and hold a filter 53 in relation with the second part 62 of the inner tube member 14. Thereby, an atmospheric air (an outside air) as a standard gas is introduced into the inner tube member 14 (the casing 10) at the gas inlets 52 through the filter 53 from the auxiliary gas inlets 55, and concurrently the water as the liquid such as the water drop is prevented from going into the inner tube member 14. On the other hand, the outer tube member 54 is disposed as overlaying the outside of the inner tube member 14 at the first part 61, and on this overlaying part, a circumferentially ring shaped outer tube/an inner tube tightening part 75 is provided. By means of the outer tube/the inner tube tightening part 75, the outer tube member 54 is combined to the inner tube member 14.

The main body metal 9 is formed at its front opening part with a cylindrical protector attaching part 9a, and a cap shaped protector 11 is attached there for covering the front pointed end (detecting part) of the oxygen detector element 2 at fixed spaces. The protector 11 is formed with a plurality of gas penetrating holes lla for passing the gas to be measured (e.g., an exhausted gas).

As shown in Fig. 2A, an external electrode layer 2b of the oxygen detector element 2 is for covering an allover elementary part of the front pointed end than an engaging flange part 2s of the oxygen detector element 2. An electrically conductive layer 2f in the circumferential direction formed at the rear pointed end on the outer circumference of the element is electrically connected to the external electrode layer 2b through a connecting pattern layer 2d in the axial direction.

The external electrode layer 2b is covered on a farther outside with a ceramic protecting layer 2p for protecting it from poisoning by the gas to be measured. The ceramic protecting layer 2p contains the magnesia·alumina spinel component, the excess magnesium oxide component not concerned with the magnesia·alumina spinel, and the zirconium oxide component. As to the specific composition, Al component is 20 to 69.5 wt% in terms of Al2O3, and if the weight content rate of Al in terms of Al2O3 is WA1 (wt%)and the weight content rate of Mg in terms of MgO is WMg (wt%), WA1+WMg is 40 to 97 wt%, and if the mol content rate of Al in terms of Al2O3 is NA1 and the mol content rate of Mg in terms of MgO is NMg, they are NMg > NA1, and Zr component is 3 to 60 wt% in terms of ZrO₂.

As shown in Fig. 2B, the ceramic protecting layer 2p is formed as, for example, a porous ceramic jetted film having many communicating holes from the surface side to the external electrode layer 2b so as to permit the external electrode layer 2b to contact the gas to be measured.

In the oxygen sensor 1, the atmospheric air as the standard gas is introduced into the outer tube member 54 through the filter 53. The atmospheric air is led into the oxygen detector element 2 via the ceramic separator 18 in Fig. 1. On the other hand, the oxygen detector element 2 is contacted at the outside with the gas to be measured led via a gas penetrating hole lla of the protector 11, and the oxygen detector element 2 is caused with electromotive force of oxygen concentration cell. The electromotive force of oxygen concentration cell is taken out as a detecting signal of oxygen concentration in the gas to be measured via the leading wires 21, 20 from the electrode layers 2b, 2c (Figs. 2A and 2B), thereby enabling to detect the oxygen concentration if the gas to be measured.

The ceramic protecting layer 2p prevents the external electrode layer 2b from being poisoned by poisoning elements such as Si, P or Pb contained in the gas to be measured, and also plays a role of controlling non-burnt content as hydrocarbon contained in the gas to be measured to burn the external electrode layer 2b as a catalyst and to advance a burning reaction more sharply than necessarily. By employing the ceramic protecting layer 2p of the above mentioned composition, it is possible to improve the adhesion to the solid electrolytic layer composing the oxygen detector element 2 and the durability thereof, resulting in that inconveniences such as exfoliation is less to occur even if the thermal shock or the heat-cooling cycle are added.

One example of a producing method of the oxygen detector element will be explained. Zirconium oxide powder is mixed with powders of a stabilizing agent of a predetermined amount (for example, yettrium oxide), pulverized, mixed (e.g., wet-pulverization by such as a ball mill), dried and baked so as to produce temporarily baked powders made the stabilizing agent solid therein. The temporarily baked powder is wet-pulverized and added with an organic binder component to make a slurry, and the slurry is dried by a spray dry method for producing ground powders of forming. This product is formed into a cylindrical shape by a die pressing and is processed at the outer circumference into a desired shape by such as a grinding, and baked at predetermined temperature in order to obtain an oxygen ion conductive solid electrolyte of zirconium oxide being main. Subsequently, as shown in Fig. 2A and 2B, the main body is formed at an inner face with an internal electrode layer 2c and at an outer face with an external electrode layer 2b respectively by, for example, an electroless plating, while an electrode pattern 2f or 2d are formed by a pattern forming-baking with, e.g., a metal paste to produce the oxygen detector element 2 (provided that the ceramic protecting layer 2p is not yet formed).

One example of a producing method of the ceramic protecting layer 2p will be explained. Alumina raw material and magnesia raw material are mixed in a predetermined composition, and dissolved to produce a spinel ingot. If the spinel ingot is pulverized to turn out spinel powders. On the other hand, zirconia powder is separately prepared and mixed with the above mentioned spinel powder to be zirconium oxide of a predetermined amount for producing raw material powder for jetting. For containing the excess magnesium oxide component in a ceramic protecting layer 2p to be obtained, at least any of, for example, the following three methods can be employed.
1) A mixture and a composition of spinel ingot are selected such that magnesia oxide is excessive than a theoretical composition of magnesia·alumina spinel (composition formula: Al₂O₃ · MgO).
2) Powders containing magnesium oxide (for example, magnesium oxide powder) is mixed at a predetermined amount separately from spinel powder and zirconia powder.
3) Magnesium oxide component is contained as the stabilizing agent component in zirconia powder. Depending on this method, the excess magnesium oxide component is contained not in forming of single magnesium oxide grains of high absorption but in forming of making solid in grains of zirconia powder, and therefore the fluidity of the raw material powder is by far improved to make it easy to form a protective film of uniform film thickness.

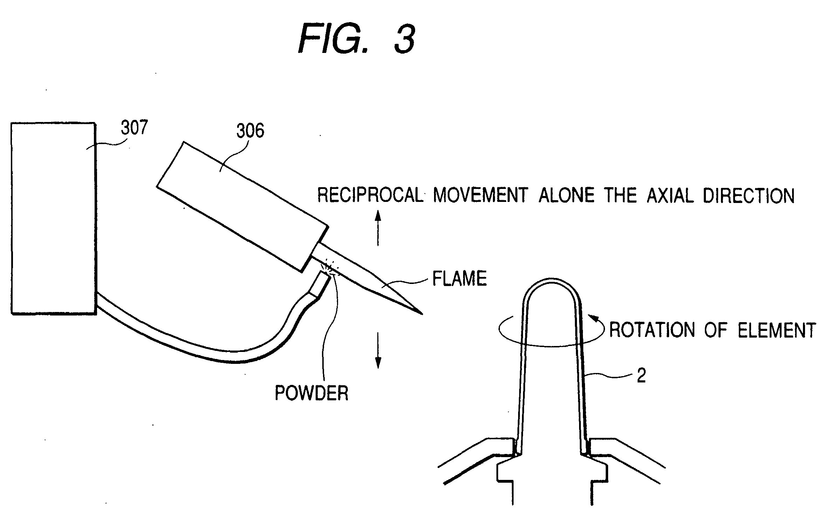

As shown in Fig. 3, a plasma jetting is done with a plasma gun 306 to form the ceramic protecting layer 2p. The plasma gun 306 impresses high frequency voltage between a center electrode (not shown) being a cathode and a nozzle (not shown) being an anode, voltage and current are maintained between these electrodes such that the plasma power is 20 to 40 kW, thereby to generate an arc, so that a working gas flowing between the electrodes (for example, inert gas such as argon gas) is excited by high frequency to generate the plasma. Within a frame by this plasma, the raw material powder for jetting is supplied and dissolved, and is blown to the outside of the element, so that the ceramic protecting layer 2p is formed. For forming the uniform ceramic protecting layer 2p, it is preferable that while the element 2 is rotated around an axis, the plasma gun 306 is relatively reciprocated with respect to the element 2 along the axial direction.

In the invention, as far as the gas sensor using the detector element comprising the oxygen ion conductive solid electrolyte, it is applicable not only to the oxygen sensor, but also to other kinds of sensors, for example, an air fuel ratio sensor, HC sensor or such as NOx sensor. As the embodiments of the invention, the above mentioned is only one embodiment to the last, and it is needless to say that various modifications are available in such a range not getting out the inventive subject matter. For example, in an oxygen sensor of such a type where a plate shaped oxygen ion conductive solid electrolyte is formed on both surfaces with the porous electrodes, and the electrode of one side is laminated with a plate shaped heater, and the electrode of the other side is exposed into the gas to be measured to be a detecting electrode, the detecting electrode can be protected with the above mentioned protecting layer.

Explanation will be made to the experimented results performed for confirming.the effects of the invention.

The oxygen detector element of the oxygen sensor shown in Fig. 1 was produced by the above explained method. The oxygen ion conductive solid electrolyte for composing the element had the composition where yttrium oxide was contained 5 mol% in zirconium oxide. The respective electrodes were formed by the respective methods. The external electrode layer was formed as Pt porous electrode by the electroless plating.

Subsequently, the magnesia-alumina spinel powder having the theoretical composition (Al₂O₃·MgO) was produced by the above mentioned method. Powder diameters were adjusted to be 80 µm or less by a mesh classification. On the other hand, the magnesium oxide was contained 24 wt% as the stabilizing agent, and zirconia powder (diameter of 53 µm or less) comprising the rest being zirconium oxide was prepared, and raw powders for jetting of various mixing ratios were produced as using together with magnesia oxide powder (diameter of 45 µm or less) as requested.

The ceramic protecting layers of various kinds of compositions were formed at the film thickness of 50 to 300 µm for covering the external electrode layer using the jetting raw powder by the plasma jetting method, and the structures of the respective ceramic protecting layers were analyzed by the X-ray diffract meter. With respect to the compositions of the ceramic protecting layers, the layer was stripped off from the oxygen detector element after each test, Al, Mg and Zr were analyzed through an ICP emission spectra analysis, and the content rates thereof were obtained in terms of Al₂O₃, MgO and ZrO₂. The results are shown in Table 1 (the upper step of the column is wt% and the lower step is mol%). Based on the contents in terms of oxides, the converted content rate of magnesia spinel (Al₂O₃·MgO) (assuming that all content of Al₂O₃ are contained in a form of magnesia·alumina spinel) and the converted content rate of excess MgO (corresponding to WMg-WMg') were demanded similarly.

For the above oxygen detector elements, the following tests were made.

### (Heat cooling cyclic tests)

Such a treatment is one cycle where the detector element is flame-heated at the outside of the front pointed end for 90 seconds (temperature of the element: 1150°C), left at room temperatures for 90 seconds, and air-cooled for 90 seconds (temperature of the element: 50°C). Repeating the cycles, and when cracks appear in the ceramic protecting layer, or the layer is peeled off, it is decided as an end of life. The testing number n is 10, and the average value of the life cycle number and the standard deviation were demanded.

### (Evaluating tests of anti-noise chemical characteristics)

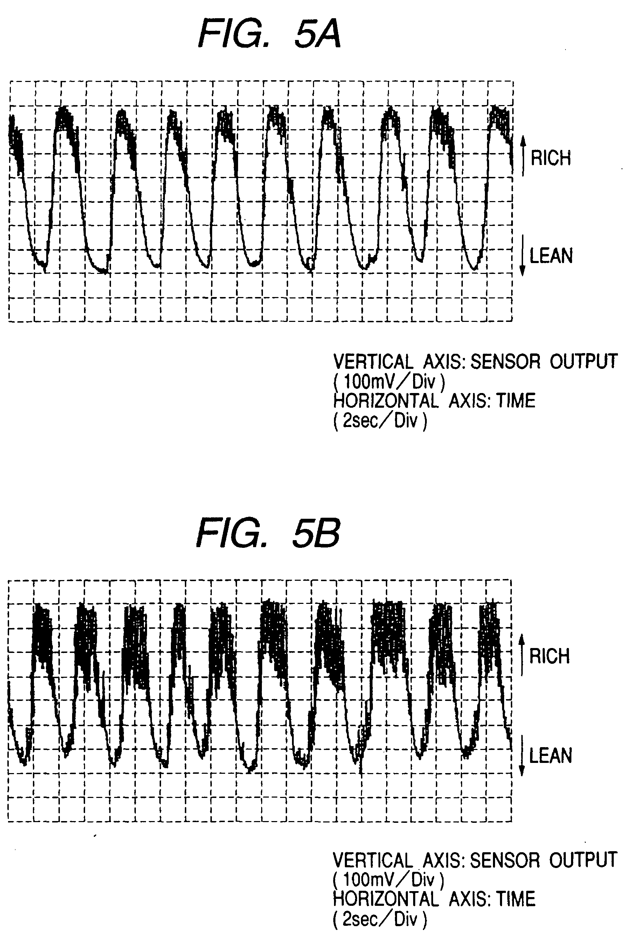

The element was heated up to an activating temperature, and a testing gas was caused to flow for the measuring tests, and at the same time the content of combustible components in the testing gas was periodically switched between a richer condition than the theoretical air fuel ratio and a leaner condition, and the levels of the chemical noises appearing in the response waveform were evaluated. Figs. 5A and 5B are the measured examples where the axis of ordinate shows the sensor output and the axis abscissa shows time. It is seen that the outputs periodically change in company with the rich/lean switching, and a noise waveform in a high frequent shape appears in each half wave of the rich condition. This noise waveform was regarded as a chemical noise, and judgements were performed in that the levels of around degrees in Fig. 5A are good (A), and the levels of around degrees in Fig. 5B are bad (B).

The above tested results are shown in Table 1.

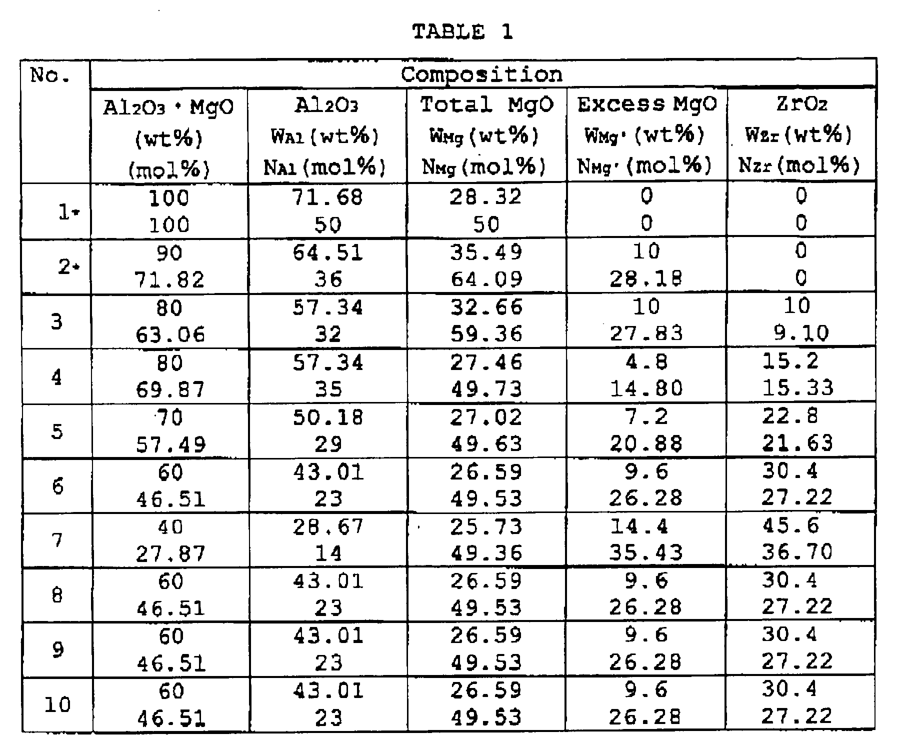

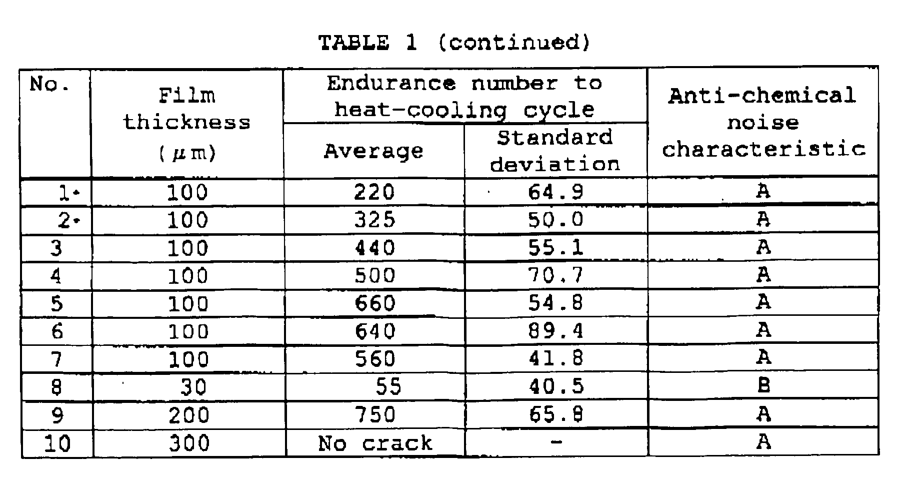

According to the above results, with respect to the tested products Nos. 3 to 7, 9 and 10 formed with the protecting films containing excess magnesium oxide component and zirconium oxide component, it is seen that the heat cooling resistibility and the anti-chemical noise are both satisfactory (in the tested product No. 8 extremely reducing the film thickness of the protecting layer, the heat cooling resistability and the anti-chemical noise are not sufficiently secured).

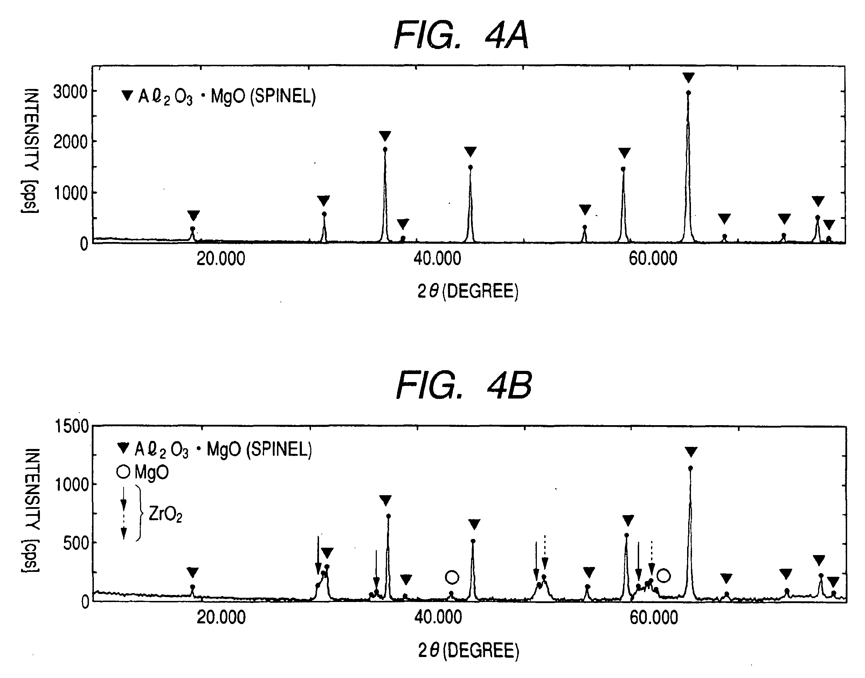

Further, Fig. 4A is the X-ray diffraction pattern of the protecting layer of the comparative example (the tested product No. 1) formed with the spinel powder only, and the peaks of magnesia-alumina spinel only are observed. On the other hand, Fig. 4B is the X-ray diffraction pattern of the protecting layer of the example (the tested product No. 6), and it is seen that the peaks of magnesia oxide and zirconium oxide appear other than the peaks of magnesia·alumina spinel. Not limiting to the tested product No. 6, but with respect to all of the protecting films of the examples (Nos. 3 to 10), the respective peaks of magnesia·alumina spinel, magnesium oxide and zirconium oxide were clearly observed in the X-ray diffraction patterns.

The entire disclosure of each and every foreign patent application from which the benefit of foreign priority has been claimed in the present application is incorporated herein by reference, as if fully set forth.

## Claims

1. A gas sensor (1) comprising:
a pair of porous electrode layers (2b and 2c);
a detector element (2) between the porous electrode layers (2b and 2c), wherein the detecting element (2) comprises an oxygen ion conductive solid electrolyte comprising zirconium oxide as a major component, and one of the porous electrode layers is a detecting-side electrode (2b) to be exposed to a gas to be measured; and
a ceramic protecting layer (2p) covering the surface of the detecting-side electrode (2b),
wherein the ceramic protecting layer (2p) comprises a magnesia·alumina spinel component, an excess magnesium oxide component not involved in the magnesia·alumina spinel component, and a zirconium oxide component.

2. A gas sensor (1) comprising:
a pair of porous electrode layers (2b and 2c);
a detector element (2) between the porous electrode layers (2b and 2c), wherein the detecting element (2) comprises an oxygen ion conductive solid electrolyte comprising zirconium oxide as a major component, and one of the porous electrode layers is a detecting-side electrode (2b) to be exposed to a gas to be measured; and
a ceramic protecting layer (2p) covering the surface of the detecting-side electrode (2b),
wherein the ceramic protecting layer (2p) is an oxide based film comprising at least Al, Mg and Zr as metallic cations, in which Al component is 20 to 69.5 wt% in terms of Al₂O₃, and when the weight content rate of Al in terms of Al₂O₃ is WA1 (wt%) and the weight content rate of Mg in terms of MgO is WMg (wt%), WA1+WMg is 40 to 97 wt%, and when the mol content rate of Al in terms of Al₂O₃ is NA1 and the mol content rate of Mg in terms of MgO is NMg, the relationship: NMg > Na1 is satisfied, and Zr component is 3 to 60 wt% in terms of ZrO.

3. The gas sensor according to claim 1 or 2, wherein the ceramic protecting layer (2p) contains Al component 20 to 69.5 wt% in terms of Al₂O₃, and assuming that all of the Al component is involved in forming of magnesia·alumina spinel having a composition formula of Al₂O₃·MgO, when the weight content rate of all Mg in terms of MgO in the protecting layer (2p) is WMg (wt%) and the weight content rate of Mg in terms of MgO to be contained in magnesia·alumina spinel is WMg' (wt%), the value of (WMg - WMg') is 4 to 40 wt%.

4. The gas sensor according to claim 3, wherein the ceramic protecting layer (2p) contains Al component 20 to 66.5 wt% in terms of Al₂O₃.

5. The gas sensor according to any one of claims 1 to 4, wherein the ceramic protecting layer (2p) has a thickness of 50 to 200 µm.

6. The gas sensor according to claim 2, wherein the Al component is 25 to 60 wt% in terms of Al₂O₃.

7. The gas sensor according to claim 2, wherein WA1+WMg is 40 to 80 wt%

8. The gas sensor according to claim 2, wherein the Zr component is 20 to 6.0 wt% in terms of ZrO.

9. The gas sensor according to claim 3 or 4, wherein the value of (WMg - WMg') is 4.5 to 15 wt%.

10. The gas sensor according to any one of claims 1 to 9, wherein the ceramic protecting layer (2p) has a thickness of 70 to 150 µm.

11. The gas sensor according to any one of claims 1 to 10, wherein the ceramic protecting layer (2p) has a porocity of 10 to 40%.
